# FASCICULE DE BREVET EUROPEEN

(11) **EP 0 467 773 B1**
(45) Date de publication et mention de la délivrance du brevet: **28.12.1994**
(21) Numéro de dépôt: 91401977.3
(22) Date de dépôt: 16.07.1991
(51) Int. Cl.: F16H 59/02, F16H 59/10, F16H 61/16

(54) **Dispositif de commande manuelle de boîte de vitesses automatique**
Handschaltvorrichtung für automatische Getriebe
Manual control device for automatic gearbox

(30) Priorité: 17.07.1990 FR 9009097
(43) Date de publication de la demande: 22.01.1992
(73) Titulaire: REGIE NATIONALE DES USINES RENAULT S.A., 92109 Boulogne Billancourt (FR)
(72) Inventeur: Leorat, François, F-78000 Versailles (FR); Lauter, Jaques, F-78310 Maurepas (FR); Mollet, Jean-Claude, F-92380 Garches (FR)

(56) Documents cités:
- EP-A- 0 353 310
- EP-A- 0 365 715
- WO-A-87/00806
- WO-A-90/04225

## Description

La présente invention se rapporte à un dispositif de commande manuelle de boîte de vitesses automatique, notamment pour véhicule de tourisme.

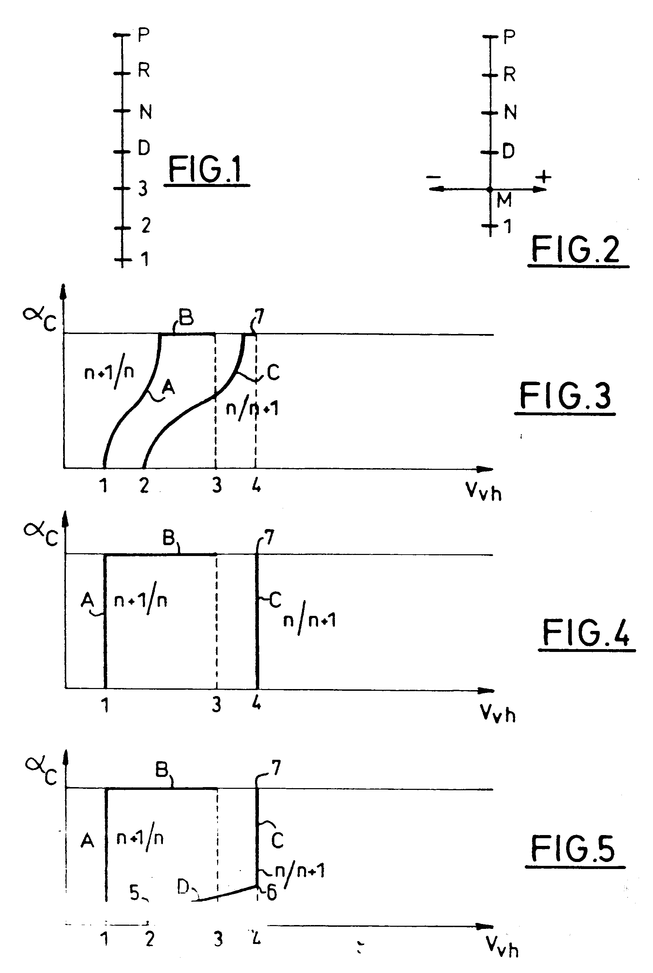

Les grilles actuelles de sélection manuelle de boîte de vitesses automatique, notamment pour véhicule automobile de tourisme, sont schématisées sur la figure 1. Ces dispositifs comportent une grille longitudinale dans laquelle sont disposées, de l'avant vers l'arrière, les positions P pour Parcage, R pour Recul, N pour Neutre, D pour Drive (automatique), 3 pour "troisième rapport imposé" qui interdit le quatrième rapport, 2 pour "deuxième rapport imposé" qui interdit les troisième et quatrième rapports, et 1 pour "premier rapport imposé". Ces dispositifs présentent l'inconvénient de ne pas offrir au conducteur une position qui lui permette de gérer lui-même commodément les changements de rapport lorsqu'il le désire.

Par la publication WO 90-04225, on connaît un sélecteur peur boîte de vitesses automatique comportant une grille de sélection longitudinale dont une position M, autorise le pilotage manuel de la boîte par déplacement transversal du levier. Outre la position de pilotage manuel M, le sélecteur décrit dans ce document comporte deux positions automatique, une position neutre et une position de recul. Le sélecteur proposé permet donc au conducteur de renoncer aux automatismes de commande de la boîte, pour passer lui-même les rapports sur la position M. Cependant ce sélecteur ne permet pas de gérer l'indispensable compromis entre les ordres de passage de l'utilisateur et certains automatismes résiduels de la boîte, destinés à la sauvegarde du moteur en évitant son calage ou son surrégime.

Le but de la présente invention est de proposer un dispositif de commande manuel de boîte de vitesses, notamment pour véhicule de tourisme, permettant au conducteur de rétrograder sur la ligne de sélection, et de disposer d'automatismes résiduels de sauvegarde du moteur, tout en pouvant échapper à ces derniers en accédant directement à une position de rapport imposé.

L'invention propose à cet effet un dispositif de commande manuelle notamment pour véhicule de tourisme, comportant d'une part une grille de sélection longitudinale entre des positions P pour le parcage, R pour le recul, N pour le neutre, D pour drive (automatique), M pour le pilotage manuel, et d'autre part une grille de sélection transversale correspondant à un pilotage manuel impulsionnel de la boîte, selon lequel les changements de rapports montants sont obtenus par déplacement vers la droite, et les changements de rapport descendants sont obtenus par déplacement vers la gauche. Ce dispositif est caractérisé en ce que le passage de la position D à la position M fait automatiquement rétrograder la boîte de vitesses, si celle est sur le troisième ou le quatrième rapport et, la position M est disposée entre la position D et une position de première imposée.

Selon l'invention, le pilotage manuel impulsionnel est limité par des automatismes de changement de rapport de sauvegarde, notamment afin d'éviter le calage ou le surrégime du moteur.

La présente invention offre ainsi l'avantage d'offrir, par rapport aux systèmes existants, une position Manuelle qui autorise le conducteur, par une simple impulsion vers la droite ou vers la gauche sur le levier de sélection, de changer de rapport en montant ou en descendant, comme sur une botte de vitesses manuelle, tout en offrant les garanties nécessaires à la sauvegarde du moteur en évitant calage ou surrégime.

D'autres caractéristiques et avantages de la présente invention ressortiront de la description qui suit du mode de réalisation donné à titre d'exemple en référence aux dessins annexés, sur lesquels :
- la figure 1 représente un dispositif de commande manuelle de boîte de vitesses automatique connu;
- la figure 2 représente un dispositif de commande manuelle de boîte de vitesses automatique selon l'invention;
- la figure 3 représente un couple de courbes traduisant les lois de passage montante et descendante pour les rapports n et n+1, selon les dispositifs connus, en position D du sélecteur;
- la figure 4 représente un couple de courbes traduisant les lois de passage montante et descendante pour les automatismes de sauvegarde selon l'invention pour les rapport n et n+1 avec n≧2;
- la figure 5 est une figure similaire à la figure 4 pour n = 1.

Le dispositif de commande de boîte de vitesses automatique notamment pour véhicule automobile de tourisme selon l'invention est représenté sur la figure 2.

Ce dispositif comporte :
- une grille longitudinale dans laquelle sont disposées de l'avant vers l'arrière des positions P pour Parcage, R pour Recul, N pour Neutre, D pour Drive (automatique) et 1 pour la première vitesse imposée ;
- une grille transversale correspondant à une position M Manuelle, qui est située entre les positions D et 1, et qui correspond à un pilotage annuel impulsionnel de la botte de vitesses automatique, les changements de rapport en montant s'obtenant par impulsion vers la droite en position M, et les changements de rapport en descendant s'obtenant par impulsion vers la gauche en position M.

Selon l'invention, les positions imposées 3 et 2 disparaissent, et le fait de passer de la position D à la position M fait automatiquement rétrograder la boîte de vitesses en troisième, si celle-ci était en quatrième, et en seconde si elle était en troisième. La position 1 première imposée, qui est partiellement hydraulique, est nécessairement conservée.

Selon l'invention, lorsque l'on est en position manuelle M, c'est-à-dire lorsque l'on est en position de pilotage manuel impulsionnel, celui-ci est limité par des automatismes de changement de rapport de sauvegarde, qui permettent :
- d'éviter d'arrêter le véhicule sur un rapport supérieur si le conducteur a oublié de redescendre tous les rapports manuellement;
- de redémarrer toujours en première vitesse;
- d'éviter tout surrégime accidentel du moteur;
- de conserver la possibilité de passage instantané en rétrogradant, notamment en sautant un rapport c'est-à-dire en passant du quatrième rapport au deuxième rapport, ou du troisième rapport au premier rapport, ce que la commande manuelle décrite ici ne peut pas permettre par définition.

Selon l'invention, ces automatimes résiduels s'obtiennent, en position M du sélecteur, en modifiant les lois de changement des rapports établis pour la boîte de vitesses automatique en position D du sélecteur.

Les lois de passage pour les différents rapports sont représentées en position D du sélecteur par un couple de courbes dessinées sur la figure 3. Ce couple de courbes traduit les lois de passages montant et descendant pour les rapports n et n+1, avec en abscisse la valeur de la vitesse du véhicule Vᵥₕ, et en ordonnée la valeur de l'ouverture du carburateur α_{c}. La courbe C correspond aux lois de passage du rapport n au rapport n+1, avec un point 2 correspondant à la position pied levé, et un point 7 correspondant à la position dite de kick-down ou de rétro-contact. Les lois de passage du rapport n+1 au rapport n sont représentées par la courbe A, avec le point 1 qui correspond au pied levé. La courbe A se prolonge par la courbe B qui correspond à la position de rétro-contact qui est également représentée par l'extrémité de la courbe C. Les extrémités de la courbe B, et de la courbe C qui est le point 7, se rapportent sur la ligne des abscisses respectivement aux points 3 et 4.

Selon l'invention, lorsque l'on est en commande manuelle dans un rapport n ≧2, les lois de passage sont représentées sur la figure 4. L'espace de la commande manuelle est limité par les courbes A, et C qui sont des automatismes de changement des rapports de sauvegarde, et par la courbe B qui autorise en cas d'urgence le retour automatique au rapport n-1 ou n-2 dès que l'ouverture du carburateur atteint la position de rétro-contact. La courbe A représente l'automatisme de sauvegarde qui évite le sous-régime, voire le calage du moteur lorsque la vitesse du véhicule est trop faible. La courbe C représente l'automatisme de sauvegarde permettant d'éviter un surrégime du moteur quand la vitesse du véhicule est trop importante. Par rapport aux lois de passage des rapports de la boîte de vitesses automatique en position D du sélecteur représentées sur la figure 3, on retrouve ainsi des points analogues aux points 1, 3 et 4 ainsi qu'au point 7.

Dans le cas du rapport de première et lorsque la boîte de vitesses automatique est équipée d'une roue libre pour le passage du premier au deuxième rapport, les lois de passage pour la première en position manuelle sont représentées sur la figure 5. Comme pour la figure 4, on a les mêmes automatismes de sauvegarde représentés par les courbes A et C. En revanche pour la courbe C, celle-ci ne se prolonge pas jusqu'au point 4 mais continue par une courbe D entre les points 6 et 5 et se termine au point 2 analogue à celui de la figure 3. En effet en l'absence de la courbe D, lorsque l'on est en première sur la position manuelle M, et que l'on lève le pied, on passe automatiquement en roue libre et il n'y a plus de frein moteur.Pour éviter cet inconvénient, il y a avantage à passer en deuxième vitesse pour supprimer l'effet de roue libre : on a alors une loi de passage 1/2 automatique sous faible charge qui est représentée par la courbe D.

## Revendications

1. Dispositif de commande manuelle pour boîte de vitesses automatique, notamment pour véhicule de tourisme, comportant d'une part une grille de sélection longitudinale entre des positions P pour le parcage, R pour le recul, N pour le neutre, D pour drive (automatique), M pour le pilotage manuel, et d'autre part une grille de sélection transversale correspondant à un pilotage manuel impulsionnel de la boîte, selon lequel les changements de rapports montants sont obtenus par déplacement vers la droite, et les changements de rapport descendants sont obtenus par déplacement vers la gauche, caractérisé en ce que :
- le passage de la position D à la position M fait automatiquement rétrograder la boîte de vitesses, si celle est sur le troisième ou le quatrième rapport et,
- la position M est disposée entre la position D et une position de première imposée.

2. Dispositif de commande selon la revendication 1, caractérisé en ce que le pilotage manuel impulsionnel est limité par des automatismes de changement de rapport de sauvegarde.

3. Dispositif de commande selon la revendication 2, caractérisé en ce qu'un automatisme de sauvegarde agit de manière à passer du rapport n + 1 au rapport n, afin d'éviter un sous-régime, voir un calage du moteur, et d'arrêter le véhicule sur un rapport supérieur à 1.

4. Dispositif de commande selon la revendication 2, caractérisé en ce qu'un automatisme de sauvegarde agit de manière à passer du rapport n au rapport n + 1, afin d'éviter l'emballement du moteur.

5. Dispositif de commande selon la revendication 2, caractérisé en ce qu'un automatisme de sauvegarde agit en position de rétro-contact, c'est-à-dire en ouverture alimentation carburant α_{c} maximale, de manière à autoriser, en cas d'urgence, le retour automatique au rapport n-1, ou n-2, même en l'absence d'impulsion vers la gauche sur le sélecteur.

## Claims

1. A manual control device for an automatic gearbox, in particular for a private vehicle, comprising on the one hand a longitudinal selector gate for selecting between positions P for park, R for reverse, N for neutral, D for drive (automatic), M for manual control, and on the other hand a transverse selector gate corresponding to sequential manual control of the gearbox, whereby the upward gear changes are produced by displacement towards the right and the downward gear changes are produced by displacement towards the left, characterised in that:
- the shift from position D to position M causes the gearbox to change down automatically if it is in third or fourth gear, and
- the position M is disposed between the position D and a first gear hold position.

2. A control device according to claim 1 characterised in that the sequential manual control is limited by automatic safeguard gear change procedures.

3. A control device according to claim 2 characterised in that an automatic safeguard procedure acts in such a way as to change from the gear n+1 to the gear n in order to avoid an excessively low engine speed and even stalling of the engine and stopping the vehicle in a gear higher than 1.

4. A control device according to claim 2 characterised in that an automatic safeguard procedure acts in such a way as to change from the gear n to the gear n+1 in order to avoid racing of the engine.

5. A control device according to clam 2 characterised in that an automatic safeguard procedure acts in a kick-down position, that is to say in the condition of maximum fuel supply opening α_{c}, in such a way as to permit in an urgency situation an automatic return to the gear n-1 or n-2, even in the absence of a push on the selector towards the left.

## Patentansprüche

1. Handschaltvorrichtung für automatische Getriebe, insbesondere für Personenkraftfahrzeuge, die einerseits einen in Längsrichtung verlaufenden Wählweg aufweist für die Position P für das Parken, R für die Rückwärtsfahrt, N für die Rollstellung, D für die (automatische) Vorwärtsfahrt, M für die manuelle Schaltung sowie einen in Querrichtung verlaufenden Wählweg aufweist, für eine impulsförmige manuelle Schaltung des Getriebes, bei der ein Wechsel zu größeren Gängen hin durch eine Verschiebung nach rechts erfolgt und ein Wechsel zu niedrigeren Gängen hin durch eine Verschiebung nach links erfolgt, dadurch gekennzeichnet, daß
- ein Übergang von der Position D in die Position M automatisch zu einer Herunterschaltung des Getriebes führt, wenn dieses sich im dritten oder vierten Gang befindet und
- die Position M zwischen der Position D und einer Position für den ersten eingelegten Gang liegt.

2. Schaltvorrichtung nach Anspruch 1, dadurch gekennzeichnet, daß die manuelle impulsförmige Schaltung durch Schutz-Automatismen für den Gangwechsel begrenzt ist.

3. Schaltvorrichtung nach Anspruch 2, dadurch gekennzeichnet, daß ein Schutz-Automatismus dergestalt wirkt, daß vom Gang n + 1 in den Gang n geschaltet wird, um eine zu niedrige Drehzahl und ein Stehenbleiben des Motors zu vermeiden und daß das Fahrzeug in einem Gang größer als 1 angehalten wird.

4. Schaltvorrichtung nach Anspruch 2, dadurch gekennzeichnet, daß ein Schutz-Automatismus dergestalt wirkt, daß vom Gang n in den Gang n + 1 geschaltet wird, um ein Überdrehen des Motors zu vermeiden.

5. Schaltvorrichtung nach Anspruch 2, dadurch gekennzeichnet, daß ein Schutz-Automatismus in einer Endstellung, d. h. bei maximaler Öffnung α_{c} der Brennstoffversorgung dergestalt wirkt, daß im Notfall eine automatische Zurückschaltung in den Gang n - 1 oder n - 2 erfolgt, selbst wenn keine Berührung nach links auf den Wählhebel ausgeübt wird.
